# EUROPEAN PATENT APPLICATION

(11) **EP 3 214 621 A1**
(43) Date of publication of application: **06.09.2017**
(21) Application number: 15854311.6
(22) Date of filing: 13.08.2015
(51) Int. Cl.: G21C 17/108, G01T 3/00

(54) **LONG-LIFESPAN IN-CORE INSTRUMENT**

(30) Priority: 30.10.2014 KR 20140149607
(71) Applicant: Korea Hydro & Nuclear Power Co. Ltd., Seoul 06170 (KR)
(72) Inventor: CHA, Kyoon Ho, Daejeon 34101 (KR); KIM, Yong Deog, Daejeon 34101 (KR); ROH, Koyung Ho, Daejeon 34101 (KR); KIM, Yong Bae, Daejeon 34101 (KR)
(74) Representative: Stöckeler, Ferdinand
(86) International application number: PCT/KR2015/008468
(87) International publication number: WO 2016/068462

(57) **Abstract**

A long-lifespan in-core instrument having an extended lifespan due to an enhanced combustion lifespan of an emitter according to the present invention comprises: a central tube; an outer sheath tube distanced from the outer circumferential surface of the central tube; self-powered neutron detectors placed between the central tube and outer sheath tube, and each comprising an emitter of a material having a reaction cross section with neutron that is comparatively smaller than that of rhodium; a background detector for compensating for the background noise signal; core exit thermocouples for detecting the core exit temperature; and filler wires filling in the space between the self-powered neutron detectors, background detector and core exit thermocouples, and as such, the present invention can markedly reduce the amount of spent in-core instrument waste, which is high-level radioactive material, and thus can contribute in securing a utility space for the high-level waste material, as well as in reducing radiation exposure of the nuclear power plant personnel.

## Description

### [Technical Field]

The present invention relates to a long-lived in-core instrumentation, and more particularly to a long-lived in-core instrumentation that measures power distribution of a reactor core which is important for safe operation of a nuclear power plant.

### [Background Art]

The most important index for safe operation of a nuclear reactor is a power peaking factor (Fq), and it is required to continuously and accurately measure three-dimensional power distribution of a reactor core in order to monitor a value of the power peaking factor. Power distribution of a reactor core is measured using an in-core instrumentation, and movable in-core instrumentations and fixed in-core instrumentations are used in nuclear power plants.

The movable in-core instrumentation, which usually uses a fission chamber, is usable during a lifetime of a nuclear power plant and able to accurately measure three-dimensional power distribution of a reactor core: however, the power distribution is measured only periodically and thus on-line measurement is not possible.

On the other hand, the fixed in-core instrumentation is able to perform on-line measurement, but it should be periodically replaced because an emitter material of the instrumentation, which generates a reactor core power signal, depletes while reacting with neutrons in the reactor core.

The fixed in-core instrumentation is in the form of a Self-Powered Neutron Detector (SPND) which does not need external power because an atomic nucleus and a neutron of an internal conductor react with each other to thereby generate an electron and, in turn, generate currents proportional to power.

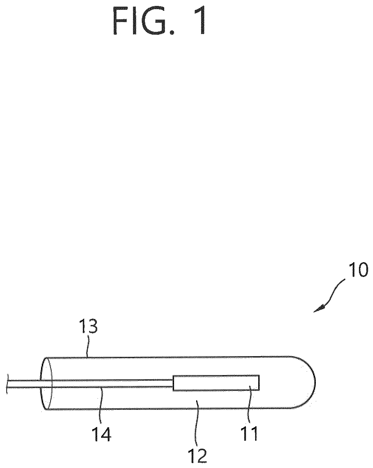

FIG. 1 is a conceptual diagram briefly illustrating configuration of an SPND.

Referring to FIG. 1, a SPND 10 includes: an emitter 11 which is an internal conductor which emits an electron; an insulator 12 which is resistant to radiation and thus isolates the inside/outside; a collector or sheath 13 which collects electrons to thereby generate currents; and a lead wire 14.

An SPND used as a fixed in-core instrumentation of a nuclear power plant is composed of rhodium, manufactured in the form of an assembly, and inserted into a guide tube located at the center of a nuclear fuel assembly during a normal operation period to measure power of a reactor core in real time.

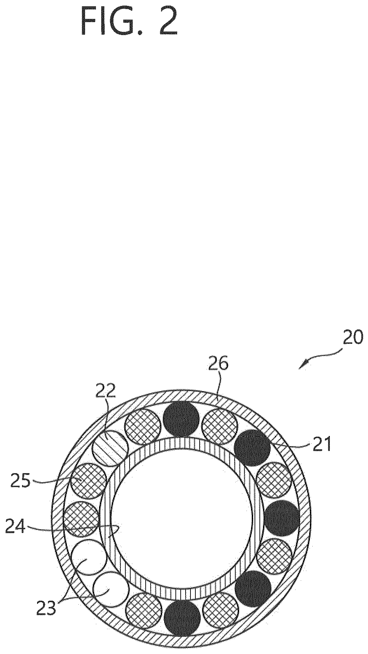

FIG. 2 is a cross-sectional view of a conventional rhodium SNPD assembly.

Referring to FIG. 2, an in-core instrumentation assembly includes five rhodium SNPDs 21, one background detector 22, two core exits T/C 23, one central member assemblies 24, fillers 25 filling the space between detectors, and a sheath tube 26 located in the outside.

The lifetime of the in-core instrumentation configured as above depends on the lifetime of an SPND, which depends on a depletion time of an emitter. That is, the lifetime of a fixed in-core instrumentation depends on the lifetime of an emitter material.

As rhodium, which is commonly used as an emitter material of an in-core instrumentation, depletes quickly, the lifetime of the in-core instrumentation is two or three cycles (up to six years), which adds the burden for operating nuclear power plants because of increasing replacement costs of the in-core instrumentation and difficulties in securing a storage space for the high-level waste material.

### [Disclosure]

### [Technical Problem]

The object of the present invention aims to provide an in-core instrumentation that enhances a depletion time of an emitter so as to extend the lifetime of the in-core instrumentation.

### [Technical Solution]

In one general aspect of the present invention, there is provided a long-lived in-core instrumentation including: a central tube; an outer sheath tube distanced from an outer circumferential surface of the central tube; Self-Powered Neutron Detectors (SPNDs) placed between the central tube and outer sheath tube, and each comprising an emitter of a material having a reaction cross section with neutron that is comparatively smaller than that of rhodium; a background detector for compensating for the background noise signal; core exit thermocouples for detecting the core exit temperature; and filler wires filling the space between the self-powered neutron detectors, the background detector, and the core exit thermocouples.

The emitter may be composed of at least one of vanadium, cobalt, and platinum.

The emitter may have a diameter greater than a diameter of an emitter composed of rhodium in order to maintain a signal level of the emitter composed of rhodium.

The emitter may have a diameter of 0.6mm to 1.12mm.

### [Advantageous Effects]

The long-lived in-core instrumentation according to the present invention changes a emitter material of an instrumentation, which reacts with a neutron, to a low-burnup material, such as vanadium, cobalt, and platinum to thereby increase the lifetime of the in-core instrumentation, and, as a result, it is possible to markedly reduce the amount of spent in-core instrumentation waste, which is high-level radioactive material, and thus can contribute in securing a storage space for the high-level waste material, as well as in reducing radiation exposure of the nuclear power plant personnel.

### [Description of Drawings]

FIG. 1 is a conceptual diagram briefly illustrating configuration of a Self-Powered Neutron Detector (SPND).
FIG. 2 is a cross-sectional view of a conventional rhodium in-core instrumentation assembly.
FIG. 3 is a cross-sectional view of an in-core instrumentation assembly according to an embodiment of the present invention.

### [Best Mode]

The terms used in the specification and claims should not be construed as limiting to mean typically or lexically, but are to be construed to mean in context with the technical idea of the present disclosure based on the principle that an inventor can define the concept of an object or thought properly to best describe the disclosure in mind. Therefore, the configuration shown in the drawing and the embodiment described herein are merely an exemplary embodiment of the present disclosure to be written rather than completely listed, and it should be understood that there are various modifications and equivalents for substituting the disclosure at the present time of this application.

Hereinafter, a long-lived in-core instrumentation according to the present invention will be described with reference to the accompanying drawings.

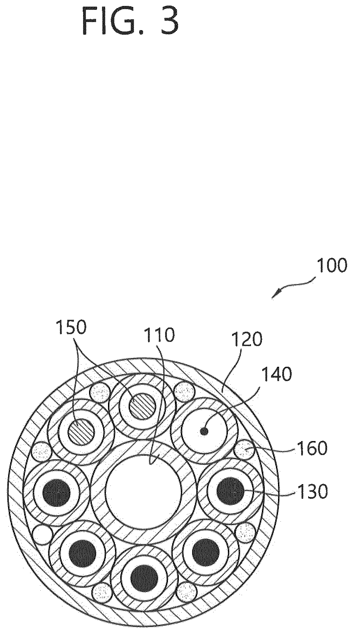

FIG. 3 is a cross-sectional view illustrating an in-core instrumentation assembly according to an embodiment of the present invention.

Referring to FIG. 3, a long-lived in-core instrumentation 100 according to an embodiment of the present invention may include a central tube 110, an outer sheath tube 120, self-powered neutron detectors 130, a background detector 140, core exit thermocouples 150, and filler wires 160.

The central tube 110 and the outer sheath tube 120 are concentric, and the central tube 110 penetrates the outer sheath tube 120. In addition, the outer sheath tube 120 is spaced apart from the outer circumferential surface of the central tube 110 to thereby form a space in which the SPNDs 130, the background detector 140, and the core exit thermocouples 140 can be installed.

Five SPNDs 130 may be placed between the central tube 110 and the outer sheath tube 120.

The SPNDs 130 may be composed of a material having a neutron absorption cross section that is relatively smaller than that of rhodium. The material having a neutron absorption cross section that is relatively smaller than that of rhodium may be vanadium, cobalt, platinum, or the like.

Neutron reaction characteristics of vanadium are similar to those of rhodium, so, when vanadium is used, it is easy to employ a conventional rhodium analytical method and measure the power distribution of a reactor. Neutron reaction and gamma reaction occur in cobalt, and gamma reaction primarily occurs in platinum. Thus, an in-core instrumentation using cobalt or platinum may employ an analytical method different from a method that is employed when rhodium or vanadium is used.

Meanwhile, vanadium, cobalt, and platinum has a neutron absorption cross section that is relatively smaller than that of rhodium, and thus, vanadium, cobalt, and platinum may produce less signals than rhodium of the same size.

Sensitivity of a SPND 130 is proportional to the volume of an emitter material. It is possible to increase signals of the SPND 130 by increasing a diameter or length of an emitter. However, increasing the length of the SPND 130 requires changing a signal processing systems.

Accordingly, the long-lived in-core instrumentation 100 according to an embodiment of the present invention is provided with an emitter having a diameter (approximately 1.0mm) which is about twice the diameter (approximately 0.5mm) of an emitter used in the conventional rhodium SPND, thereby enabled to maintain a signal level of the conventional rhodium SPND.

As such, the long-lived in-core instrumentation 100 according to an embodiment of the present invention uses an emitter composed of a material having a neutron absorption cross section that is relatively smaller than that of rhodium, and a diameter of an emitter of the SPND 130 is increased to maintain a signal level, so that the lifetime of the emitter may extend.

Meanwhile, to prevent an outer diameter of the in-core instrumentation from increasing due to the increased diameter of the emitter of the long-lived in-core instrumentation 100 according to an embodiment of the present invention, the outer diameter of the central tube may be reduced, the diameter of the filler wires 160 may be reduced, and the position of the filler wires 160 may be adjusted.

Accordingly, the long-lived in-core instrumentation 100 according to an embodiment of the present invention is able not just to extend the lifetime of the emitter, but to maintain its outer diameter to be the same as the outer diameter of the conventional rhodium SPND, and thus, the long-lived in-core instrumentation 100 may be used without modifying the existing design of nuclear power plants.

The embodiment of the present invention, described above and shown in the drawing, should not be construed as limiting the technical ideas disclosed in the present specification. The scope of the present invention is limited only by the claims, and a person having ordinary skill in the art can modify the technical ideas in various ways. Therefore, the variations and modifications shall belong to the scope of the claims of the present invention as long as they are obvious to a person having ordinary skills in the art.

## Claims

1. A long-lived in-core instrumentation comprising:
a central tube;
an outer sheath tube distanced from an outer circumferential surface of the central tube;
Self-Powered Neutron Detectors (SPNDs) placed between the central tube and outer sheath tube, and each comprising an emitter of a material having a reaction cross section with neutron that is comparatively smaller than that of rhodium;
a background detector for compensating for the background noise signal;
core exit thermocouples for detecting the core exit temperature; and
filler wires filling the space between the self-powered neutron detectors, the background detector, and the core exit thermocouples.

2. The long-lived in-core instrumentation of claim 1, wherein the emitter is composed of at least one of vanadium, cobalt, and platinum.

3. The long-lived in-core instrumentation of claim 1, wherein the emitter has a diameter greater than a diameter of an emitter composed of rhodium in order to maintain a signal level of the emitter composed of rhodium.

4. The long-lived in-core instrumentation of claim 1, wherein the emitter has a diameter of 0.6mm to 1.12mm.
